# EUROPEAN PATENT APPLICATION

(11) **EP 4 606 651 A1**
(43) Date of publication of application: **27.08.2025**
(21) Application number: 23896856.4
(22) Date of filing: 30.11.2023
(51) Int. Cl.: B60R 13/04

(54) **CAR WINDOW TRIM STRIP CONNECTION STRUCTURE**

(30) Priority: 02.12.2022 CN 202211535749
(71) Applicant: Fuyao Glass Industry Group Co., Ltd., Fuqing, Fujian 350300 (CN)
(72) Inventor: SHEN, Zhi, Fuzhou, Fujian 350300 (CN); YU, Yusheng, Fuzhou, Fujian 350300 (CN); WANG, Peng, Fuzhou, Fujian 350300 (CN); ZHANG, Fuhui, Fuzhou, Fujian 350300 (CN); SHA, Ruibin, Fuzhou, Fujian 350300 (CN)
(74) Representative: Patentanwälte Olbricht Buchhold Keulertz
(86) International application number: PCT/CN2023/135317
(87) International publication number: WO 2024/114714

(57) **Abstract**

The present disclosure provides a vehicle window trim strip connection structure, including a first trim strip (1) disposed at a first position on a window frame and a second trim strip (2) disposed at a second position on the window frame. The second position is connected to the first position. The first trim strip (1) and the second trim strip (2) are fitted and engaged or integrally connected, to reduce or eliminate an assembly tolerance between the first trim strip (1) and the second trim strip (2). According to the present disclosure, the technical problems of the complex connection structure and the poor adaptability between trim strips at different window positions can be solved.

## Description

### CROSS-REFERENCE TO RELATED APPLICATIONS

The present disclosure claims priority to Chinese Invention Patent Application No. 202211535749.7, filed December 2, 2022, and entitled "vehicle window trim strip connection structure".

### TECHNICAL FIELD

The present disclosure relates to the field of vehicle accessories, further to a vehicle window trim strip connection structure, and particularly to a connection structure of an upper frame trim strip and a rear side window bright strip of a vehicle.

### BACKGROUND

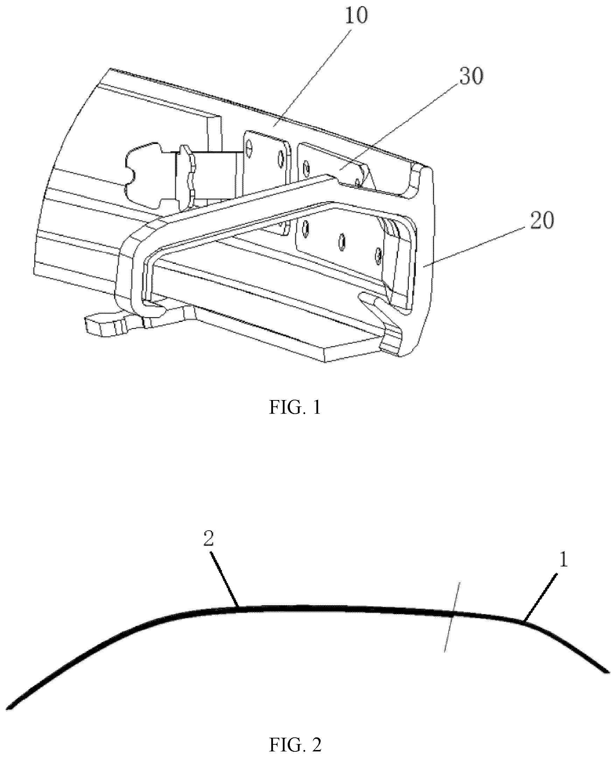

In existing vehicles (e.g., vehicles with frameless windows), the connection method between the upper frame trim strip 20 and the rear side window (corner window) bright strip 10 mostly employs a connector 30. Specifically, as illustrated in FIG. 1, the connector 30 is first adhesively bonded to the rear side window bright strip 10 using glue or other fixing modes, and then fitted and clamped with a clamping groove on the upper frame trim strip 20, thereby achieving the purpose of connecting the upper frame trim strip 20 with the rear side window bright strip 10. However, the engagement between the connector 30 and the upper frame trim strip 20 cannot guarantee a complete attachment between the contact surfaces of them, thus failing to ensure tolerances in a Z-direction (an up-and-down direction of the window) and a Y-direction (an inside-and-outside direction of the window) after the upper frame trim strip 20 and the rear side window bright trim strip 10 are assembled.

The assembly of the upper frame trim strip 20 and the rear side window bright strip 10 has several disadvantages, in addition to the large assembly tolerance caused by the need to fix the connector 10 to the rear side window bright strip 10 using glue. These disadvantages are as follows:
1. Additional assembly tooling and connectors need to be developed, resulting in higher manufacturing costs.
2. The assembly structure is complex, requiring higher operating skills of the assembly personnel.
3. Since the upper frame trim strip 20 and the rear side window bright strip 10 are both made of aluminum alloy, there is a risk of contact corrosion between the connector 30 and the aluminum alloy.
4. The connection strength of the connector 30 cannot be guaranteed.

Regarding the problems of the complex connection structures and the poor adaptability between trim strips at different window positions in the related art, no effective solution has been given yet.

### SUMMARY

The present disclosure aims to provide a vehicle window trim strip connection structure, which can realize the assembly of trim strips at different window positions without requiring additional parts or tooling, and can ensure the assembly tolerance within an allowable range, so that the structure is simple and the assembly is convenient.

The present disclosure can be achieved by adopting the following technical solution.

The present disclosure provides a vehicle window trim strip connection structure, including a first trim strip disposed at a first position on a window frame, and a second trim strip disposed at a second position on the window frame. The second position is connected to the first position. The first trim strip and the second trim strip are fitted and engaged or integrally connected, to reduce or eliminate an assembly tolerance between the first trim strip and the second trim strip.

The present disclosure has the following advantageous effects:
1. The vehicle window trim strip connection structure can reduce or eliminate the assembly tolerance between the first trim strip and the second trim strip, and improve the assembly effect of the first trim strip and the second trim strip.
2. The vehicle window trim strip connection structure can realize the assembly between the first trim strip and the second trim strip without requiring additional parts or tooling, and optimize the assembly effect of the first trim strip and the second trim strip.
3. The vehicle window trim strip connection structure is simple in structure and convenient to assemble, which reduces the operability requirements for assembly personnel.
4. The vehicle window trim strip connection structure can avoid the risk of contact corrosion between different structural parts and prolong the service life of the product.

### BRIEF DESCRIPTION OF THE DRAWINGS

The following drawings are only for schematic illustration and explanation of the present disclosure, rather than limiting the scope of the present disclosure. In the drawings:
FIG. 1 illustrates a schematic diagram of a connection structure of an upper frame trim strip and a rear side window bright strip of a vehicle in the prior art.
FIG. 2 illustrates a schematic diagram of an overall structure of a first trim strip and a second trim strip in a window trim strip connection structure of the present disclosure.
FIG. 3 illustrates a schematic diagram of a connection position between a first trim strip and a second trim strip in a vehicle window trim strip connection structure of the present disclosure.
FIG. 4 illustrates a structural diagram of a surface of a second trim strip after cutting treatment in a vehicle window trim strip connection structure of the present disclosure.
FIG. 5 illustrates a cross-sectional view of a connection position between a first trim strip and a second trim strip in a vehicle window trim strip connection structure of the present disclosure.
FIG. 6 illustrates a cross-sectional view of a second trim strip before cutting in a vehicle window trim strip connection structure of the present disclosure.
FIG. 7 illustrates a cross-sectional view of a second trim strip after cutting in a vehicle window trim strip connection structure of the present disclosure.
FIG. 8 illustrates a schematic diagram of set positions of first fixing portions in a vehicle window trim strip connection structure of the present disclosure.
FIG. 9 illustrates a schematic diagram of a connection structure of a first fixing portion and a second fixing portion in a vehicle window trim strip connection structure of the present disclosure.

### DETAILED DESCRIPTION OF THE EMBODIMENTS

For a clearer understanding of the technical features, objectives and effects of the present disclosure, specific embodiments of the present disclosure will now be described with reference to the drawings.

As illustrated in FIGS. 2 to 5, the present disclosure provides a vehicle window trim strip connection structure, which includes a first trim strip 1 and a second trim strip 2. The first trim strip 1 is disposed at a first position on a window frame, and the second trim strip 2 is disposed at a second position on the window frame. The first position and the second position are different positions on the window frame, and the second position is connected to the first position. The first trim strip 1 and the second trim strip 2 are fitted and engaged or integrally connected, so as to reduce or eliminate the assembly tolerance between the first trim strip 1 and the second trim strip 2.

In the present disclosure, the conventional connector for connecting the first trim strip 1 and the second trim strip 2 is eliminated, and the first trim strip 1 and the second trim strip 2 are fitted and engaged or integrally connected, so that the assembly tolerance between the first trim strip 1 and the second trim strip 2 can be reduced or eliminated. Therefore, the assembly between the first trim strip 1 and the second trim strip 2 can be realized without requiring additional parts or tooling, and the assembly tolerance can be ensured within an allowable range, so that the structure is simple and the assembly is convenient.

In the present disclosure, both the first trim strip 1 and the second trim strip 2 may be made of, but not limited to, aluminum alloy or stainless steel.

In an optional embodiment of the present disclosure, the first trim strip 1 may be a rear side window (corner window) bright strip of a vehicle, and the corresponding first position is a wrapping structure which is disposed on an upper frame of a rear side window of the vehicle; the second trim strip 2 may be an upper frame trim strip of the vehicle, and the corresponding second position is a side panel sheet metal structure which is disposed on the upper frame of the window of the vehicle and located in front of the wrapping structure. During assembly, the rear side window bright strip is connected to the wrapping structure, and the upper frame trim strip is connected to the side panel sheet metal structure.

Since the assembly tolerance between the upper frame trim strip and the rear side window bright strip can be eliminated in this embodiment, after the upper frame trim strip and the rear side window bright strip are installed on the vehicle, the connection position between the upper frame trim strip and the rear side window bright strip achieves an excellent appearance without steps and gaps, thereby improving the overall perceived quality of the vehicle.

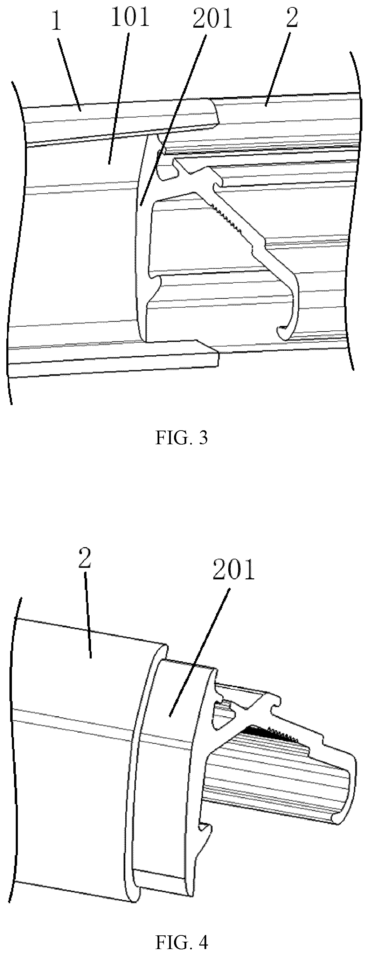

In an optional embodiment of the present disclosure, as illustrated in FIGS. 3 to 5, a recess 101 is formed on the first trim strip 1, and an engagement portion 201 adapted to the recess 101 is formed on the second trim strip 2 and located at a junction of the second position and the first position. The engagement portion 201 on the second trim strip 2 can be inserted into the recess 101 on the first trim strip 1, so that the engagement portion 201 can be fitted and engaged with the recess 101, thereby realizing the connection between the first trim strip 1 and the second trim strip 2 without the need to provide a connector.

Further, a first contact surface is formed on an inner wall of the recess 101, and a second contact surface is formed on the engagement portion 201. When the engagement portion 201 is fitted and engaged with the recess 101, the first contact surface is attached to the second contact surface, which not only improves the stability of the engagement between the first trim strip 1 and the second trim strip 2, but also reduces tolerances in a Z-direction (an up-and-down direction of the window) and a Y-direction (an inside-and-outside direction of the window) after the first trim strip 1 and the second trim strip 2 are assembled.

Specifically, as illustrated in FIG. 3, after the second trim strip 2 is formed by extrusion, the surface of the engagement portion 201 on the second trim strip 2 may be milled (to make the surface of the second trim strip 2 stepped) to form the second contact surface. The shape of the second contact surface formed by milling may be determined according to the shape of the inner wall of the recess 101 on the first trim strip 1, so long as the second contact surface can be attached to the first contact surface. Alternatively, the inner wall of the recess 101 on the first trim strip 1 may be milled after the first trim strip 1 is formed by extrusion, so as to form the first contact surface. The shape of the first contact surface formed by milling may be determined according to the shape of the surface of the engagement portion 201 on the second trim strip 2. Since the milling treatment has the characteristic of high precision, it can ensure that the tolerance between the first trim strip 1 and the second trim strip 2 is greatly reduced after they are assembled.

In an optional embodiment of the present disclosure, the first trim strip 1 and the second trim strip 2 may be formed by integral extrusion, and at least part of the first trim strip 1 and/or at least part of the second trim strip 2 may be milled to enable the first trim strip 1 and the second trim strip 2 to be adaptively connected to the first position and the second position respectively. By forming the first trim strip 1 and the second trim strip 2 through integral extrusion, it completely eliminates the gap between the first trim strip 1 and the second trim strip 2. This not only simplifies product development and grinding tools, but also ensures that the first trim strip 1 and the second trim strip 2 as a whole are more aesthetically pleasing in appearance, thereby improving the user experience.

In this embodiment, the first trim strip 1 and the second trim strip 2 may be formed by extrusion using, but not limited to, a base material of 6060 aluminum alloy.

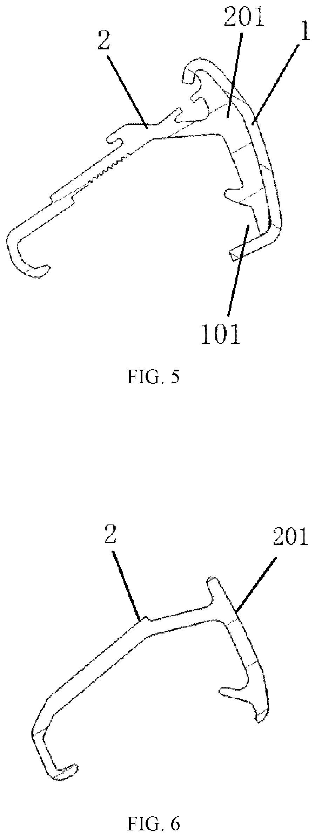

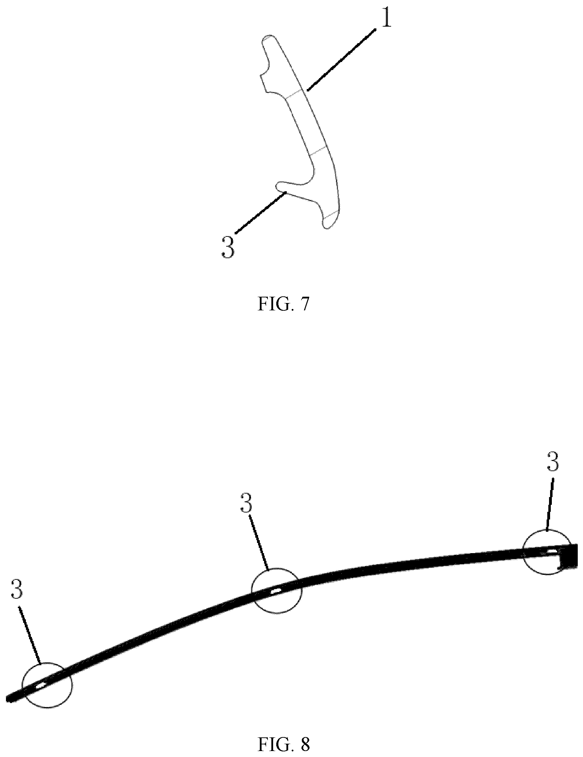

In an optional embodiment of the present disclosure, as illustrated in FIGS. 6 and 7, after the second trim strip 2 is extruded (the second trim strip 2 satisfies the connection relationship with the second position), the engagement portion 201 on the second trim strip 2 may be cut according to the structure of the first position to remove part of the engagement portion 201 (e.g., a lower part), so as to prevent the second engagement portion 201 from extending to the back of the first trim strip 1 for engagement and causing an interference with the first position.

In an optional embodiment of the present disclosure, as illustrated in FIG. 8, the first trim strip 1 is provided with at least one first fixing portion 3, the first position is provided with at least one second fixing portion 4 adapted to the first fixing portion 3, and the first fixing portion 3 and the second fixing portion 4 are connected by fitting. Through the fitting between the first fixing portion 3 and the second fixing portion 4, the first trim strip 1 is ensured to be stably mounted at the first position.

Further, as illustrated in FIG. 8, the number of the first fixing portions 3 and the number of the second fixing portions 4 are plural, the first fixing portions 3 are evenly distributed at an interval along an extending direction of the first trim strip 1, and the second fixing portions 4 are disposed at positions in the first position opposite to the first fixing portions 3. The number of the first fixing portions 3 and the number of the second fixing portions 4 may be adjusted according to the length of the first trim strip 1, so long as the first trim strip 1 is firmly mounted at the first position.

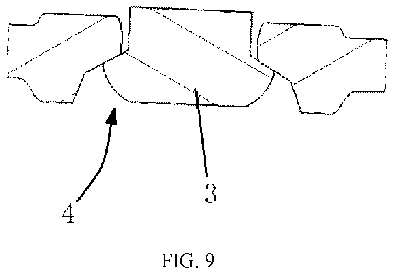

In a specific embodiment of the present disclosure, as illustrated in FIG. 9, during milling of the first trim strip 1, a locking block may be formed by milling the first trim strip 1 to serve as the first fixing portion 3 (i.e., the locking block is the first fixing portion 3). During injection of the first position, a notch may be reserved at the first position to serve as the second fixing portion 4 (i.e., the notch is the second fixing portion 4). During mounting of the first trim strip 1, the locking block is engaged in the notch, so as to mount the first trim strip 1 at the first position. Of course, the mounting mode of the first trim strip 1 is not limited to engagement, and a snap structure may be disposed between the first trim strip 1 and the first position, so that the first trim strip 1 can be mounted at the first position through the snap structure to achieve the effects of reinforcement and detachment prevention.

In another specific embodiment of the present disclosure, as illustrated in FIG. 7, during milling of the first trim strip 1, a boss not milled may be reserved on the first trim strip 1 to serve as the first fixing portion 3 (i.e., the boss is the first fixing portion 3). During injection of the first position, a locking groove is disposed at the first position to serve as the second fixing portion 4 (i.e., the locking groove is the second fixing portion 4). During mounting of the first trim strip 1, the boss is engaged in the locking groove, so that the first trim strip 1 is mounted at the first position, which not only archives the effects of reinforcement and detachment prevention, but also avoids additional milling procedures of the first trim strip 1. Alternatively, the first trim strip 1 may be provided with both the locking block and the boss, and the first position may be provided with both the notch and the locking groove, so as to further improve the stability of the connection between the first trim strip 1 and the first position.

In an optional embodiment of the present disclosure, when the first trim strip 1 is long, an adhesive layer may be disposed on a connection surface of the first trim strip 1, so that the first trim strip 1 is adhered to the first position to further improve the stability of the connection between the first trim strip 1 and the first position. The adhesive layer may be, but is not limited to, an adhesive tape adhered to the first trim strip 1.

In an optional embodiment of the present disclosure, the second trim strip 2 is fixed at the second position by a connector. The connector may be, but not limited to, a bolt or any other connecting piece, so long as the second trim strip 2 is stably connected to the second position.

Further, after the second trim strip 2 is connected to the second position, a sealing strip is disposed between the second trim strip 2 and the second position to improve the sealing performance of the connection position.

The mounting process of the vehicle window trim strip connection structure of the present disclosure is as follows: firstly, the wrapping structure is mounted on the upper frame of the rear side window of the vehicle; after the rear side window bright strip and the upper frame trim strip are fitted and engaged or integrally extruded, the rear side window bright strip is fitted with and connected to the second fixing portion 4 on the wrapping structure through the first fixing portion 3; if the connection surface of the rear side window bright strip is provided with an adhesive tape, the rear side window bright strip can be further reinforced by being adhered to the wrapping structure through the adhesive tape; after the rear side window bright strip is mounted, the upper frame trim strip is also located at a position opposite to the side panel sheet metal structure on the upper frame of the window of the vehicle; at this time, the upper frame trim strip is fixedly connected to the side panel sheet metal structure by bolts or any other connecting piece, and then the sealing strip is mounted between the upper frame trim strip and the side panel sheet metal structure to complete the mounting of the vehicle window trim strip connection structure.

The characteristics and the advantages of the vehicle window trim strip connection structure of the present disclosure are as follows:
1. The vehicle window trim strip connection structure can reduce or eliminate the assembly tolerance between the first trim strip 1 and the second trim strip 2, and improve the assembly effect of the first trim strip 1 and the second trim strip 2.
2. The vehicle window trim strip connection structure can realize the assembly between the first trim strip 1 and the second trim strip 2 without requiring additional parts or tooling, and optimize the assembly effect of the first trim strip 1 and the second trim strip 2.
3. The vehicle window trim strip connection structure is simple in structure and convenient to assemble, which reduces the operability requirements for assembly personnel.
4. The vehicle window trim strip connection structure can avoid the risk of contact corrosion between different structural parts and prolong the service life of the product.

Those described above are only illustrative specific embodiments of the present disclosure, and are not intended to limit the scope of the present disclosure. Equivalent changes and modifications made by any person skilled in the art without departing from the concept and principles of the present disclosure should fall within the protection scope of the present disclosure.

## Claims

1. A vehicle window trim strip connection structure, comprising:
a first trim strip disposed at a first position on a window frame; and
a second trim strip disposed at a second position on the window frame, wherein the second position is connected to the first position;
wherein the first trim strip and the second trim strip are fitted and engaged or integrally connected, to reduce or eliminate an assembly tolerance between the first trim strip and the second trim strip.

2. The vehicle window trim strip connection structure according to claim 1, wherein a recess is formed on the first trim strip, an engagement portion adapted to the recess is formed on the second trim strip, the recess and the engagement portion are located at a junction of the second position and the first position, and the engagement portion on the second trim strip is inserted into the recess on the first trim strip and fitted and engaged with the recess.

3. The vehicle window trim strip connection structure according to claim 2, wherein a first contact surface is formed on an inner wall of the recess, a second contact surface is formed on the engagement portion, and the first contact surface is attached to the second contact surface.

4. The vehicle window trim strip connection structure according to claim 3, wherein the first contact surface is formed by milling the inner wall of the recess, or the second contact surface is formed by milling a surface of the engagement portion.

5. The vehicle window trim strip connection structure according to claim 1, wherein the first trim strip and the second trim strip are formed by integral extrusion, and at least part of the first trim strip and/or at least part of the second trim strip is milled, so that the first trim strip and the second trim strip are adaptively connected to the first position and the second position, respectively.

6. The vehicle window trim strip connection structure according to any one of claims 1 to 5, wherein the first trim strip is provided with at least one first fixing portion, the first position is provided with at least one second fixing portion adapted to the first fixing portion, and the first fixing portion and the second fixing portion are connected in a mating manner.

7. The vehicle window trim strip connection structure according to claim 6, wherein the number of the first fixing portions and the number of the second fixing portions are plural, the first fixing portions are distributed at an interval along an extending direction of the first trim strip, and the second fixing portions are disposed at positions in the first position opposite to the first fixing portions.

8. The vehicle window trim strip connection structure according to claim 6, wherein during milling of the first trim strip, a locking block is formed by milling the first trim strip to serve as the first fixing portion; and a notch is reserved at the first position to serve as the second fixing portion, and the locking block is engaged in the notch.

9. The vehicle window trim strip connection structure according to claim 6, wherein during milling of the first trim strip, a boss not milled is reserved on the first trim strip to serve as the first fixing portion; and a locking groove is disposed at the first position to serve as the second fixing portion, and the boss is engaged in the locking groove.

10. The vehicle window trim strip connection structure according to claim 6, wherein the first trim strip is adhered to the first position.

11. The vehicle window trim strip connection structure according to claim 6, wherein the second trim strip is fixed at the second position through a connector.

12. The vehicle window trim strip connection structure according to claim 11, wherein a sealing strip is disposed between the second trim strip and the second position.

13. The vehicle window trim strip connection structure according to claim 1, wherein both the first trim strip and the second trim strip are made of aluminum alloy or stainless steel.
